Europäisches Patentamt

European Patent Office

Office européen des brevets

(19)

(11) Veröffentlichungsnummer: **0 014 772**
**B1**

(12) **EUROPÄISCHE PATENTSCHRIFT**

(45) Veröffentlichungstag der Patentschrift:
17.11.82

(21) Anmeldenummer: **79105418.2**

(22) Anmeldetag: **31.12.79**

(51) Int. Cl.³: **C 08 J 3/14,** C 08 G 69/46,
C 09 D 3/70

(54) Verfahren zur Herstellung von pulverförmigen Beschichtungsmitteln auf der Basis von Polyamiden mit mindestens 10 aliphatisch gebundenen Kohlenstoffatomen pro Carbonamidgruppe.

(30) Priorität: **21.02.79 DE 2906647**

(43) Veröffentlichungstag der Anmeldung:
**03.09.80 Patentblatt 80/18**

(45) Bekanntmachung des Hinweises auf die Patenterteilung:
**17.11.82 Patentblatt 82/46**

(84) Benannte Vertragsstaaten:
**AT BE CH FR GB IT LU NL SE**

(56) Entgegenhaltungen:
**FR-A-989 062**
**FR-A-1 022 855**
**FR-A-1 313 176**
**FR-A-2 365 597**
**CHEMICAL ABSTRACTS, Band 88, Nr. 14, 3. April**
**1978, Seiten 45, 46**

(73) Patentinhaber: **CHEMISCHE WERKE HÜLS AG,**
**Postfach 1320, D-4370 Marl 1 (DE)**

(72) Erfinder: **Meyer, Klaus-Rudolf, Dr., Auf der Ürfte 3,**
**D-4320 Hattingen (DE)**
Erfinder: **Hornung, Karl-Heinz, Dr., Brandenburgische**
**Strasse 15, D-4370 Marl (DE)**
Erfinder: **Feldmann, Rainer, Dr., Leverkusener**
**Strasse 27, D-4370 Marl (DE)**
Erfinder: **Smigerski, Hans-Jürgen, Dr., Kolberger**
**Strasse 11, D-4370 Marl (DE)**

**0 014 772**

Verfahren zur Herstellung von pulverförmigen Beschichtungsmitteln auf der Basis von
Polyamiden mit mindestens 10 aliphatisch gebundenen Kohlenstoffatomen
pro Carbonamidgruppe

Gegenstand der Erfindung ist ein Verfahren zur Herstellung von pulverförmigen Beschichtungsmitteln auf der Basis von Polyamiden mit mindestens 10 aliphatisch gebundenen Kohlenstoffatomen pro Carbonamidgruppe oder Copolyamiden oder einer Mischung aus Homo- und Copolyamiden, welche mindestens 70% der genannten Bausteine enthalten, nach dem Fällungsverfahren.

Es ist bekannt, pulverförmige Beschichtungsmittel auf Basis von Polyamiden zur Herstellung lackähnlicher Überzüge von Metallen einzusetzen. Die Beschichtung erfolgt nach dem Wirbelsinterverfahren, dem Flammspritzverfahren oder nach dem elektrostatischen Beschichtungsverfahren. Die Polyamidpulver werden erhalten durch Fällen des Polyamids aus Lösungen (am 10. 05. 51 ausgelegte Unterlagen der deutschen Patentanmeldung S 2 80 5/39 b 22/04 oder Äquivalente FR-A-989 062) oder durch Mahlen des Polyamidgranulates, vorzugsweise bei tiefen Temperaturen unter einer Inertgasatmosphäre.

Das Fällungsverfahren der vorgenannten französischen Patentschrift beschreibt das Ausfällen von Polyamidpulvern aus Ethanol durch Abkühlen der heißen Polyamidlösung durch äußere Einwirkung oder durch Abkühlenlassen. Allein durch Abkühlen bzw. Abkühlenlassen der heißen Polyamidlösung werden Pulver mit hohem Feinanteil erhalten, die zu Staubauswurf und Qualmen im Wirbelbett führen. Schließlich treten bei einer solchen Arbeitsweise unerwünschte Agglomerate auf, die anschließend durch Zerreiben oder Zermahlen in die erforderliche Pulvergröße überführt werden müssen. Außerdem werden bei einem solchen Verfahren nicht reproduzierbare, d. h. unterschiedliche Chargen erhalten.

Mit Hilfe des Verfahrens der Erfindung werden durch gesteuerte kontrollierte Fällungsbedingungen diese Nachteile des Standes der Technik überwunden.

Es ist ferner bekannt, Polyamidpulver herzustellen, indem man niedermolekulare Polyamide mahlt und die so erhaltenen Pulver anschließend auf die gewünschte Viskosität bringt, indem man sie in an sich bekannter Weise auf Temperaturen unterhalb des Schmelzpunktes erhitzt (britische Patentschrift 535 138, deutsche Offenlegungsschrift 1 570 392).

Auch Polylaurinlactampulver werden nach diesen bekannten Verfahren hergestellt und nach den ebenfalls bekannten Verfahren zum Beschichten eingesetzt (Chem. Ind. November 1968, S. 783 bis 791; Modern Plastics, Februar 1966, S. 153 bis 156). Da Polylaurinlactampulver nicht immer den geforderten Bedingungen hoher Elastizität, guter Kantenbeschichtung, glatter Oberfläche, Beständigkeit gegenüber alkalischen wäßrigen Lösungen genügen und vielfach bei der Verarbeitung insbesondere zum Qualmen neigen, sind die verschiedenartigsten Verbesserungen bekanntgeworden, wie weichmacherhaltige Polylaurinlactampulver (deutsche Auslegeschrift 1 669 821), solche aus einem Gemisch aus Homopolylaurinlactam und laurinlactamhaltigen Copolyamiden (deutsche Auslegeschrift 2 144 606), solche, die N-alkoximethylgruppenhaltige Polyamide neben sauer reagierenden Katalysatoren enthalten (deutsche Offenlegungsschrift 2 222 122), oder Gemische aus Polyamiden mit 8 bis 11 aliphatisch gebundenen Kohlenstoffatomen pro Carbonamidgruppe, alkoxialkylgruppentragenden Aminoplasten und sauer reagierenden Katalysatoren (deutsche Offenlegungsschrift 2 222 123). Diese Pulver zeigen in einzelnen Fällen gute Eigenschaften, genügen jedoch noch nicht voll allen geforderten Bedingungen.

Ein wesentlich verbessertes Verfahren wird in der deutschen Auslegeschrift 2 545 267 beschrieben. Dieses Verfahren befriedigt insofern noch nicht vollständig, da zur Herstellung von pigmentfreien Pulvern ein Mahlverfahren angewendet und zur Herstellung von pigmentierten Pulvern das Fällungsverfahren betrieben werden muß. Schließlich ist für das Gelingen dieses Verfahrens Voraussetzung, Polylaurinlactamgranulate einzusetzen, welche ausschließlich durch hydrolytische Polymerisation in Gegenwart bestimmter Mengen Phosphorsäure hergestellt worden sind.

Aufgabe der Erfindung ist es daher, ein Verfahren aufzufinden, das zu Beschichtungsmitteln mit mindestens gleich guten Eigenschaften führt, d. h. daß die pulverförmig aufbringbaren Beschichtungsmittel oberhalb ihrer Filmbildungstemperatur ohne Erzeugen von störendem Qualm Überzüge mit glatter Oberfläche, guter Kantenbeschichtung, guter Elastizität und ausgezeichneter Beständigkeit gegenüber alkalischen wäßrigen Lösungen liefern. Zudem sollten die gezeigten Nachteile hinsichtlich der notwendigen Verfahrensmaßnahmen Fällung oder Mahlen, Verwenden von Homopolylaurinlactam bestimmter Herstellungsart vermieden werden.

Die Lösung dieser Aufgabe gelingt durch das Verfahren wie im Anspruch angegeben.

Einsetzbare Polyamide für das Verfahren sind demnach Polyundecansäureamid, Polylaurinlactam (11 aliphatisch gebundene Kohlenstoffatome pro Carbonamidgruppe) und Polyamide mit mehr als 11 aliphatisch gebundenen Kohlenstoffatomen pro Carbonamidgruppe, vorzugsweise Polylaurinlactam. Außerdem können die entsprechenden Copolyamide eingesetzt oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomerer, wie Caprolactam, Hexamethylendiamin, Dodecamethylendiamin, Isophorondiamin,

2

Trimethylhexamethylendiamin, Adipinsäure, Azelainsäure, Sebacinsäure, Dodecandisäure, Aminoundecansäure enthalten. Die im folgenden als Polyamide bezeichneten genannten Homo- oder Copolyamide werden als Granulate eingesetzt, die eine relative Viskosität zwischen 1,4 und 1,8 (gemessen in 0,5% m-Kresollösung bei 25°C) besitzen. Vorzugsweise werden sie erhalten durch hydrolytische Polymerisation; es können jedoch auch solche verwendet werden, die nach der aktivierten anionischen Polymerisation hergestellt worden waren. Die nach der hydrolytischen Polymerisation erhaltenen Polyamide können im Molekulargewicht geregelt oder ungeregelt hergestellt worden sein, d. h. in Abwesenheit jeglicher Kettenstabilisatoren, wie Essigsäure, Benzoesäure, Adipinsäure, Azelainsäure, Sebacinsäure, Dodecandisäure, Phosphorsäure.

Vorteilhaft verwendet man als Polylaurinlactam ein solches, welches in Gegenwart von 0,3 bis 0,7 Gewichtsprozent Phosphorsäure, 2 bis 10 Gewichtsprozent Wasser bei Temperaturen zwischen 265 und 300°C in Abwesenheit jeglicher Kettenstabilisatoren unter Eigendruck hergestellt worden war. Zweckmäßigerweise wird eine Extraktion mit Ethanol oder Methanol vorgeschaltet.

Als Lösemittel für das Fällungsverfahren gemäß der Erfindung wird ausschließlich Ethanol verwendet. Als Ethanol kann hierbei neben wasserfreiem Ethanol der übliche Alkohol eingesetzt werden, der bis zu 4 Gewichtsprozent Wasser und die üblichen Vergällungsmittel, wie z. B. Methylethylketon, Petrolether, Pyridin, enthalten kann. Das Ethanol wird mindestens in der doppelten Gewichtsmenge des Polyamids eingesetzt. Vorteilhaft beträgt sie bei Wirbelsinterpulvern das zwei- bis fünffache und bei Elektrostatikpulvern das vier- bis siebenfache, insbesondere etwa das vier- bzw. 5,6fache. Mit anderen Worten beträgt die Konzentration des Polyamids in der Lösung höchstens 33$^1$/3 Gewichtsprozent, vorteilhaft 25 bis 12,5, insbesondere etwa 20 bzw. 15 Gewichtsprozent. In diesen Konzentrationsbereichen erhält man ab der Fällung gut rührbare Suspensionen und außerdem eine gute Wärmeabführung. Aus der Tabelle 1 sind Vorteile des Lösemittels Ethanol zu erkennen.

Zur Durchführung des Verfahrens wird die Mischung aus Polyamid und Ethanol, zweckmäßigerweise in mantelbeheizten Rührkesseln auf die Lösetemperatur gebracht; diese liegt zwischen 130 und 150°C, vorzugsweise um 140±2°C. Die Aufheizgeschwindigkeit ist nicht kritisch. Das Aufheizen kann über Wärmeträger im Mantel oder vorteilhaft mit Hilfe von Niederdruckdampf oder auch Hochdruckdampf bei größeren Kesselvolumina erfolgen. Die Rührgeschwindigkeit während des Lösevorganges hat keinen Einfluß auf die Korngrößenverteilung. Anschließend wird die Lösung auf die Fällungstemperatur gebracht. Die Fällungstemperatur liegt innerhalb des Bereiches von 100 bis 125°C, vorzugsweise innerhalb des Bereiches von 120 bis 110°C. Der einstellbare Temperaturbereich für die Fällung hängt von der Kesselgröße ab, da mit größer werdendem Reaktor die Wärmeaustauschfläche pro Volumeneinheit zur Abfuhr der frei werdenden Fällungswärme abnimmt. Der Abkühlprozeß auf Fälltemperatur kann entweder durch Abdestillieren von Ethanol durchgeführt werden, indem das kalte Kondensat nach außen abgeführt wird, um örtliche Unterkühlungen zu vermeiden — in diesem Fall ist die abdestillierte Menge beim Ansetzen des Polyamid-Ethanol-Mengenverhältnisses zusätzlich zu berücksichtigen — oder durch Rückflußkühlung, wobei das rückfließende Kondensat zur Vermeidung von örtlicher Unterkühlung der Lösung in etwa Siedetemperatur haben muß, oder durch Abkühlung über die Wand, wobei der Wärmeträger die für den Fällprozeß angestrebte Temperatur nicht oder nur wenig unterschreiten darf, oder durch eine Kombination beider Abkühlmöglichkeiten. Die Abkühlung durch Destillation ist bei größeren Apparaten vorzuziehen. Die Unterkühlung des Mantelinhaltes gegenüber dem Reaktorinhalt darf um so größer sein, je schlechter sich das Medium zur Wärmeabfuhr eignet. Bei Beheizung des Kessels mit Dampf kann der Mantel nach dem Auflösen des Polyamids vollständig entspannt und von einer weiteren Zufuhr von Dampf abgesehen werden, während bei einer Temperierung mit einem flüssigen Wärmeträger bereits geringe Unterkühlungen zu Wandbelag und ungünstigeren Korngrößenverteilungen führen. Nachdem die gewünschte Fällungstemperatur erreicht ist, wird der Abkühlvorgang beendet. Für den weiteren Verlauf des Fällprozesses ist es wesentlich, daß die Fällung als polytroper Vorgang abläuft, bei dem nur ein Teil der frei werdenden Fällungswärme über den Mantel und den Reaktordeckel abgeführt wird, während der andere Teil zu einem vorübergehenden Temperaturanstieg von 0,5 bis 3°C im Reaktor führt. Dieser Prozeß wird vorzugsweise durch eine konstante Manteltemperatur und konstante Wärmeverluste über den Reaktordeckel erreicht. Die Höhe der Wärmeverluste ist für die Geschwindigkeit der Fällung entscheidend. Die Dauer des Fällungsprozesses liegt zwischen 2 und 12 Stunden, vorzugsweise 5 bis 7 Stunden.

Zur Vermeidung des Siedens wird in den Reaktor ein Inertgas, vorzugsweise Stickstoff, eingebracht. Während des Fällvorganges ist die durch das Rührorgan ausgebildete Strömung wesentlich. Für die groberen Wirbelsinterpulver ist eine Strömung einzuhalten, bei der man sich an der Grenze der Sedimentation des ausgefallenen Polyamidpulvers bewegt, was durch niedrige Rührdrehzahl erzielt wird. Um ein möglichst ungestörtes Strömungsbild zu erhalten, ist auf stromstörende Einbauten zu verzichten. Für die feineren Elektrostatikpulver sollte das Strömungsbild dagegen möglichst turbulent sein, was durch entsprechend hohe Rührdrehzahl erreicht wird. Geeignete Rührorgane sind daher Balkenrührer, Ankerrührer und Blattrührer, vorzugsweise Blattrührer, die in der Drehzahl variierbar sind. Die Abmessungen der Blattrührer liegen im Bereich Durchmesser Reaktor zu Durchmesser Rührblatt 2 : 1.

Die entstandene Suspension wird nach beendetem Fällprozeß über die Wand oder destillativ

3

abgekühlt und nach Dekantieren oder Fällen oder direkt als Suspension in einen Trockner überführt. Das Trocknen muß bis zu der bei 20% Ethanolfeuchte einsetzenden Rieselfähigkeit des Produktes unter vermindertem Druck und Wandtemperaturen unterhalb 100°C sowie schonender mechanischer Bewegung, z. B. in langsam laufenden Schaufel- oder Taumeltrocknern durchgeführt werden, um Grobgutbildung durch Agglomeration zu vermeiden. Nach Erreichen der Rieselfähigkeit kann die mechanische Bewegung intensiver werden und die Temperatur im Trockner auf über 100°C bis zu 150°C angehoben werden.

Die typische durchschnittliche Korngrößenverteilung für Wirbelsinterpulver ist dadurch charakterisiert, daß mindestens 99,5% des eingesetzten Polyamids in dem Korngrößenbereich zwischen 40 und 250 μm vorliegt.

Bei typischen Korngrößenverteilungen von Elektrostatikpulvern liegt 100% des eingesetzten Polyamids im Korngrößenbereich unter 100 μm vor.

Nach dem Verfahren der Erfindung gelingt es somit wahlweise, sowohl Wirbelsinterpulver als auch Elektrostatikpulver herzustellen. Die Pulver zeigen bei der Beschichtung von Metallen ausgezeichnete Eigenschaften hinsichtlich Dehnbarkeit und Kantenbeschichtung, als auch Beständigkeit gegenüber alkalischen wäßrigen Lösungen.

Außerdem qualmen die erhaltenen Pulver bei der Verarbeitung nicht. Bei der Fällung entsteht kein Grobgut. Bei der Aufarbeitung im Trockner kann eine gewisse Vergröberung eintreten, die jedoch von Vorteil ist, weil der Feinanteil in den Wirbelsinterpulvern noch verringert wird oder praktisch ganz verschwindet. Aus Sicherheitsgründen kann eine Schutzabsiebung nachgeschaltet werden, um bei Wirbelsinterpulvern gegebenenfalls entstandene Anteile > 250 μm und bei Elektrostatikpulvern solche > 100 μm zu entfernen. Bei Wirbelsinterpulvern kann gegebenenfalls ein noch störender Feinanteil z. B. in Zentrifugalwindsichtern abgetrennt werden.

Die Fällung kann auch in Gegenwart von Pigmenten, wie Titandioxid, Ruß, $BaSO_4$, ZnS, Cadmiumrot, Eisenoxid oder Stabilisatoren, wie 4-Hydroxi-3,5-di-tert.-butyl-phenyl-propionsäure, 4-Hydroxi-3,5-di-tert.-butyl-phenyl-propionsäure-hexamethylendiamin-bisamid, Propionsäureester mit einem aliphatischen Alkohol mit 1 bis 18 C-Atomen, Tris-alkylphenyl-, Tris-alkyl-, Tris-aryl- oder gemischten Estern der phosphorigen Säure, deren Alkylrest 1 bis 16 C-Atome enthält und geradkettig oder verzweigt ist, vorgenommen werden.

## Beispiel 1

400 kg in Gegenwart von 0,5 Gewichtsprozent Phosphorsäure hydrolytisch polymerisiertes Polylaurinlactam, mit einem Extraktgehalt von 0,6 Gewichtsprozent und einer relativen Viskosität 1,62, werden zusammen mit 2200 l Methylethylketon-vergälltem Ethanol, Wassergehalt 1 Gewichtsprozent, in einem 3-$m^3$-Reaktor (Durchmesser = 1600 mm) auf 140°C aufgeheizt. Anschließend wird die Lösung durch Destillation von etwa 200 l Ethanol in eine externe Vorlage auf 117°C abgekühlt. Gleichzeitig wird die Temperatur im Mantel durch geregelten Niederdruckdampf auf 111,5°C eingestellt, Stickstoff (2 bar) auf die Lösung aufgedrückt und die Drehzahl des Blattrührers (Durchmesser = 800 mm) auf 20 UpM zurückgenommen. Im Verlauf von 2,5 Stunden fällt nun die Reaktorinnentemperatur auf 116°C ab, steigt dann innerhalb 3 Stunden wieder um 1°C an und geht nach insgesamt 9 Stunden in ein dem ausreagiertem System entsprechendes Temperaturgefälle von −0,5°C/Stunde über. Die entstandene Suspension wird dann über den Reaktormantel auf 45°C abgekühlt und in einem Schaufeltrockner (Durchmesser 1376 mm) bei 2 UpM, 200 Torr (27 · $10^3$ Pa) und 90°C Manteltemperatur auf eine Restfeuchte von < 0,2% getrocknet. Die mittels Bildanalysator gemessene Kornverteilung lautet:

| | |
|---|---|
| < 40 μm | 0,28 Gew.-% |
| < 80 μm | 18 Gew.-% |
| < 120 μm | 79 Gew.-% |
| < 160 μm | 100 Gew.-% |

## Beispiel 2

Im Gegensatz zu Beispiel 1 wird bei der destillativen Abkühlung die Dampfzufuhr zum Reaktormantel abgesperrt und der Mantel auf Atmosphärendruck entspannt. Anschließend wird $N_2$ (2 bar) auf die Lösung aufgedrückt und die Drehzahl des Blattrührers auf 20 UpM zurückgenommen. Im Verlauf von 1,5 Stunden fällt die Innentemperatur auf 115°C ab, steigt innerhalb einer Stunde wieder um 0,5°C an und geht nach insgesamt 4,5 Stunden in ein dem ausreagierten System entsprechendes Temperaturgefälle von −1°C/Stunde über. Mit der entstandenen Suspension wird dann wie im Beispiel 1 verfahren. Die mittels Bildanalysator gemessene Korngrößenverteilung lautet:

| | | |
|---|---|---|
| < 40 μm | ≙ | 0,3 Gew.-% |
| < 80 μm | | 12,1 Gew.-% |

| | |
|---|---|
| < 120 μm | 78 Gew.-% |
| < 160 μm | 97 Gew.-% |
| < 200 μm | 100 Gew.-% |

## Beispiel 3

340 kg in Gegenwart von 0,5 Gewichtsprozent Phosphorsäure hydrolytisch polymerisiertes Polylaurinlactam, Extraktgehalt 0,24 Gewichtsprozent, relative Viskosität 1,58, werden zusammen mit 2100 l Methylethylketon-vergälltem Ethanol, Wassergehalt 1,7 Gewichtsprozent in einem 3-m³-Reaktor (Durchmesser 1600 mm) auf 140°C aufgeheizt. Zu der sich bildenden Lösung werden 20,4 kg in 160 l Ethanol dispergiertes $TiO_2$ zugefahren. Die weiß pigmentierte Polylaurinlactamlösung wird durch Abdestillieren von 200 l Ethanol auf 117°C abgekühlt. Gleichzeitig wird die Temperatur im Mantel durch geregelten Niederdruckdampf auf 111,5°C zurückgenommen. Anschließend wird $N_2$ (2 bar) auf den Reaktorinhalt aufgedrückt und die Drehzahl des Blattrührers, Durchmesser 800 mm, auf 20 UpM zurückgenommen. Im Verlauf von 4 Stunden fällt die Innentemperatur auf 115,25°C ab, steigt dann innerhalb 2,5 Stunden wieder um 0,5°C an und geht nach insgesamt 9 Stunden in ein dem ausreagierten System entsprechendes Temperaturgefälle von −0,5°C/Stunde über. Die Aufarbeitung der entstandenen Suspension erfolgt wie in Beispiel 1. Die mittels Bildanalysator gemessene Kornverteilung lautet:

| | |
|---|---|
| < 40 μm | 0,38 Gew.-% |
| < 80 μm | 3,14 Gew.-% |
| < 120 μm | 49,3 Gew.-% |
| < 160 μm | 98,25 Gew.-% |
| < 200 μm | 100 Gew.-% |

## Beispiel 4

400 kg in Abwesenheit von Phosphorsäure hydrolytisch polymerisiertes Polylaurinlactam, Extraktgehalt 0,39 Gewichtsprozent, relative Viskosität 1,46, werden zusammen mit 2200 l Methylethylketon-vergälltem Ethanol, $H_2O$-Gehalt 1,1 Gewichtsprozent, in einem 3-m³-Reaktor (Durchmesser 1600 mm) auf 140°C hochgeheizt. Die Lösung wird durch Abdestillieren von ca. 200 l Ethanol auf 117°C abgekühlt, gleichzeitig wird die Manteltemperatur durch geregelten Niederdruck- dampf auf 106,5°C zurückgenommen, $N_2$ (2 bar) auf die Lösung aufgedrückt, und die Drehzahl des Blattrührers (Durchmesser 800 mm) auf 50 UpM eingestellt. Die Innentemperatur fällt im Verlauf von 2 Stunden auf 115,25°C ab, steigt dann innerhalb von 2 Stunden wieder um 1,25°C an und geht nach 6 Stunden in ein dem ausreagierten System entsprechendes Temperaturgefälle von 1°C/Stunde über. Die Aufarbeitung der entstandenen Suspension erfolgt wie in Beispiel 1. Die mittels Siebanalyse ermittelte Korngrößenverteilung lautet:

| | |
|---|---|
| < 32 μm | 18,2 Gew.-% |
| < 45 μm | 92,8 Gew.-% |
| < 60 μm | 99,7 Gew.-% |
| < 100 μm | 100 Gew.-% |

Tabelle 1

| Löse-mittel (technisch rein) | Siede-punkt (°C) | Polyamid-12 Konzentr. Gew.-% $\eta_{rel}$ 1,62 extrah. | Löse-beginn (°C) | Obere Temp. (°C) | Fällungs-temp. (°C) | Rühr-dreh-zahl | Gelöstes Produkt | Produkt nach dem Fällen und Abkühlen | Korngröße µm |
|---|---|---|---|---|---|---|---|---|---|
| Methanol | 65 | 10 | 125 | 130 | 144 | 150 | 2 flüssige Phasen | grobe Pulversuspension | 20—600 |
| | | 20 | | | | 50 | leicht trübe Lösung | bröckliger Kuchen, Klumpen und Kuchenbrocken versintern und verhärten beim Trocknen, LM vollst. aufgesaugt, weiß-opak | — |
| Ethanol | 78 | 20 | 120 | 140 | 110 | 50 | leicht trübe Lösung | Pulversuspension, weiß | 5—300 |
| | | 25 | 120 | 140 | 112 | 50 | leicht trübe Lösung | auf der Grenze zwischen Pulversuspension und von Pulver völlig auf-gesaugtem LM, weiß | 5—300 |
| | | 30 | 120 | 140 | 114 | 100 | leicht trübe Lösung | »trockenes« Pulver, LM voll-ständig aufgesaugt, weiß | 5—300 |
| | | 40 | 120 | 140 | 116 | 100 | leicht trübe Lösung | trockenes Pulveragglomerat, LM vollständig aufgesaugt, weiß-opak | — |
| i-Propanol | 82 | 20 | 135 | 150 | 119 | 250 | 2 flüssige Phasen | klumpige Suspension, weiß, starke Anbackungen | 10—160 |
| n-Propanol | 97 | 20 | 115 | 140 | 114 | 50 | leicht trübe Lösung | bröckliger Kuchen, LM voll-ständig aufgesaugt, weiß-opak | — |
| i-Butanol | 108 | 20 | 125 | 140 | 119 | 50 | leicht trübe Lösung | bröckliger Kuchen, LM voll-ständig aufgesaugt, weiß-opak | — |
| Ethyl-diglykol | 123 | 20 | | 150 | — | 50 | kaffeebraune Lösung | Suspension, Pulver kräftig-braun, aber heller als in gelöstem Zustand | — |

| Löse-mittel (technisch rein) | Siede-punkt (°C) | Polyamid-12 Konzentr. Gew.-% $\eta_{rel}$ 1,62 extrah. | Löse-beginn (°C) | Obere Temp. (°C) | Fällungs-temp. (°C) | Rühr-dreh-zahl | Gelöstes Produkt | Produkt nach dem Fällen und Abkühlen | Korngröße $\mu$m |
|---|---|---|---|---|---|---|---|---|---|
| Ethyl-butanol | 146 | 20 | | 142 | 128 | 50 | stark trübe Lösung | bröckliger Kuchen, LM voll-ständig aufgesaugt, weiß-opak | — |
| Dimethyl-formamid | 153 | 20 | 130 | 150 | 126 | 50 | leicht trübe Lösung | bröckliger Kuchen, LM voll-ständig aufgesaugt, weiß-opak | — |
| | | 33 | 130 | 150 | 130 | 50 | stark trübe und sehr viskose Lösung | bröckliger Kuchen, voll-ständig aufgesaugt, weiß-opak | — |
| Cyclo-hexanol | 161 | 20 | | 140 | 114 | | intensiv gelb-grüne Lösung | bröckliger Kuchen, LM voll-ständig aufgesaugt, weiß-opak | — |

0 014 772

0 014 772

## Patentanspruch

Verfahren zur Herstellung von Beschichtungspulvern auf der Basis von Polyamiden mit mindestens 10 aliphatisch gebundenen Kohlenstoffatomen pro Carbonamidgruppe oder Copolyamiden oder einer Mischung aus Homo- und Copolyamiden, welche mindestens 70% der genannten Bausteine enthalten, nach dem Fällungsverfahren durch die Kombination folgender Merkmale, dadurch gekennzeichnet, daß man die Polyamide mit einer relativen Viskosität von 1,4 bis 1,8 (gemessen in 0,5% m-Kresollösung bei 25°C) mit der mindestens zweifachen Gewichtsmenge Ethanol versetzt und die Mischung unter mechanischer Bewegung bei Temperaturen von 130 bis 150°C in eine Lösung überführt, anschließend diese Lösung unter Vermeiden von örtlichen Unterkühlungen auf die zwischen 100 und 125°C liegende Fällungstemperatur einstellt, unter einer Inertgasatmosphäre zur Unterdrückung des Siedens ohne weitere Wärmezufuhr die Lösung zur Herstellung von Pulvern mit einer Korngrößenverteilung von mindestens 99,5% zwischen 40 und 250 µm mit niedriger Rührdrehzahl bei einer Strömung an der Grenze der Sedimentation des Pulvers oder zur Herstellung von Pulvern mit einer Korngrößenverteilung von 100% kleiner als 100 µm mit hoher Rührdrehzahl mit möglichst turbulentem Strömungsbild rührt, bis die Bildung der Teilchen beendet ist, wobei während der Fällung eine polytrope Phase mit einem Temperaturanstieg von 0,5 bis 3°C einzuhalten ist, schließlich die gebildete Suspension auf Temperaturen unter 70°C abkühlt, gegebenenfalls das Ethanol teilweise mechanisch entfernt, und zunächst unter vermindertem Druck bei Wandtemperaturen bis höchstens 100°C unter milder mechanischer Bewegung und ab einsetzender Rieselfähigkeit bei Wandtemperaturen bis zu 150°C unter stärkerer mechanischer Bewegung trocknet.

## Claim

A process for the production of a powdery coating composition based on a polyamide of at least 10 aliphatic carbon atoms per carbonamide group, or a copolyamide or a mixture of a homopolyamide and a copolyamide which contains at least 70% of the specified structure, by the precipitation method, employing the combination of features given below, characterised in that the polyamide has a relative viscosity of 1.4 to 1.8 (measured in a 0.5% m-cresol solution at 25°C) and is mixed with at least twice its weight of ethanol, the mixture is converted into a solution with mechanical stirring at a temperature of 130 to 150°C, then this solution is brought to the precipitation temperature, which lies in the range from 100 to 125°C, whilst avoiding local supercooling, the solution is stirred under an inert gas atmosphere to suppress boiling and without further introduction of heat, the stirring being performed either at a low speed of stirring (the flow being at the sedimentation limit of the powder), if powder particles having a particle size distribution of at least 99.5% in the range from 40 to 250 µm are to be produced, or at a higher speed of stirring (with a very highly turbulent flow pattern), if powder particles having a particle size distribution of 100% smaller than 100 µm are to be produced, until the formation of particles is complete, a polytropic phase and a temperature rise of 0.5 to 3°C being maintained during the precipitation, then the resulting suspension is cooled to a temperature below 70°C, part of the ethanol is removed mechanically if desired, and the product is dried, initially under reduced pressure at a wall temperature of at most 100°C under gentle mechanical stirring but later, from the time when the product begins to be free-flowing, at a wall temperature of up to 150°C and under more vigorous mechanical stirring.

## Revendication

Procédé de préparation de poudres de revêtement à base de polyamides comportant par groupe carbonamide au moins 10 atomes de carbone à liaison aliphatique ou à base de copolyamides ou d'un mélange d'homopolyamides et de copolyamides renfermant au moins 70% des motifs indiqués, suivant le procédé de précipitation, par la combinaison des caractéristiques suivantes, à savoir qu'on ajoute aux polyamides présentant une viscosité relative de 1,4 à 1,8 (mesurée à 25°C dans une solution à 0,5% de m-crésol) une quantité en poids au moins double d'éthanol et qu'on transforme le mélange en une solution en agitant mécaniquement à des températures de 130 à 150°C, qu'en évitant des refroidissements locaux excessifs, on porte ensuite cette solution à la température de précipitation se situant entre 100 et 125°C, qu'en vue de préparer des poudres d'une distribution granulométrique comprise pour 99,5% au moins entre 40 et 250 µm, et tout en opérant dans une atmosphère gazeuse inerte pour empêcher l'ébullition, on agite la solution, sans autre apport de chaleur, avec une faible vitesse de rotation de l'agitateur et un écoulement à la limite de la sédimentation de la poudre, ou bien qu'en vue de préparer des poudres d'une distribution granulométrique à 100% inférieure à 100 µm, on agite avec une grande vitesse de rotation de l'agitateur et un écoulement le plus turbulent possible jusqu'à ce que la formation des particules soit terminée, tandis qu'il y a lieu, pendant la précipitation,

**0 014 772**

de maintenir une phase polytrope avec une montée de température de 0,5 à 3°C, qu'on refroidit finalement à des températures inférieures à 70°C la suspension formée, qu'on élimine éventuellement l'éthanol partiellement par voie mécanique et qu'on sèche d'abord sous pression réduite à des températures de paroi atteignant au plus 100°C, avec agitation mécanique modérée, et que, dès que la fluidité s'établit, on sèche à des températures de paroi allant jusqu'à 150°C, en agitant mécaniquement plus fortement.

9